## Europäisches Patentamt
## European Patent Office
## Office européen des brevets

(19)

(11) Veröffentlichungsnummer : **0 048 803**
**B1**

(12)

# EUROPÄISCHE PATENTSCHRIFT

(45) Veröffentlichungstag der Patentschrift :
02.12.87

(51) Int. Cl.⁴ : **F 42 B 13/16**

(21) Anmeldenummer : 81106025.0

(22) Anmeldetag : 31.07.81

(54) Treibkäfiganordnung für ein unterkalibriges Geschoss und Herstellungsverfahren für dieselbe.

(30) Priorität : 03.09.80 DE 3033041

(43) Veröffentlichungstag der Anmeldung :
07.04.82 Patentblatt 82/14

(45) Bekanntmachung des Hinweises auf die Patenterteilung : 02.12.87 Patentblatt 87/49

(84) Benannte Vertragsstaaten :
AT BE CH FR GB IT LI NL SE

(56) Entgegenhaltungen :
DE-A- 1 703 507
DE-A- 2 039 719
DE-A- 2 537 116
GB-A- 2 027 855
LU-A-    57 539
US-A- 2 968 246
US-A- 2 983 224
US-A- 3 262 391

(73) Patentinhaber : Rheinmetall GmbH
Ulmenstrasse 125 Postfach 6609
D-4000 Düsseldorf (DE)

ETAT-FRANCAIS représenté par le DELEGUE GENE-
RAL POUR L'ARMEMENT
Bureau des Brevets et Inventions de la Délégation
Générale pour l'Armement 14, rue Saint-Dominique
F-75997 Paris Armées (FR)

(72) Erfinder : Montier, Patrick
14 Avenue des Dumones
F-18000 Bourges (FR)
Erfinder : Moreau, Pierre André
5 allée Cavalière
F-18000 Bourges (FR)
Erfinder : Sauvestre, Jean-Claude
11 route de Veauce
F-18230 St. Doulchard (FR)
Erfinder : Simon, Walter
Schlossweiher Strasse 14
D-51 Aachen (DE)
Erfinder : Bisping, Bernhard
Sprindecksfeld 31
D-403 Ratingen (DE)
Erfinder : Wallow, Peter
Bergische Landstrasse 615
D-4 Düsseldorf 12 (DE)
Erfinder : Gersbach, Klaus
Friedrichstrasse 5
D-4156 Willich 1 (DE)

(74) Vertreter : Behrens, Ralf Holger, Dipl.-Phys.
Ulmenstrasse 125
D-4000 Düsseldorf (DE)

## Beschreibung

Die Erfindung betrifft einen Treibkäfig mit den Merkmalen des Oberbegriffs des Anspruchs 1 und ein Verfahren zu seiner Herstellung.

Aus der US-A-3 262 391 ist ein derartiger Treibkäfig mit einem aus einer Vielzahl dünner Metallsegmente bestehenden Treibkäfigkörper bekannt. Die Segmente weisen eine entlang einem Radiusabschnitt zwischen einer geschoßnahen Zone und dem Umfang des Treibkäfigkörpers zunehmende Wandstärke auf. Dies bedingt einen bezüglich Werkstoff und komplizierter Fertigung wirtschaftlich nicht zu vertretenden Aufwand.

Ein anderer Treibkäfig ist z. B. aus der DE-A-17 03 507 bekannt. Das Fertigen dieses Treibkäfigs geschieht bisher üblicherweise folgendermaßen : Ein erster rotationssymmetrischer Körper mit der Kontur des Treibkäfigs wird durch längsaxiale Trennschnitte derart in Segmente zerteilt, daß, dem Werkstoffverlust durch entsprechende Anordnung der Trennschnitte Rechnung tragend, bei einer Dreiteilung zwei Segmente mit einem Segment eines zweiten, ebenfalls dreigeteilten, rotationssymmetrischen Körpers gemeinschaftlich eine Treibkäfiganordnung bilden. Zu diesem Zwecke müssen die Anlageflächen der Segmente mit hoher Genauigkeit und Oberflächegüte bearbeitet werden.

Die Segmente werden um das Geschoß angeordnet und dann durch ein Fremdelement, beispielsweise ein mit Sollbruchstellen versehenes Führungsband oder Dichtungselement, bis zum Zerlegen nach dem Verlassen des Waffenrohres zusammengehalten. Üblicherweise sind sowohl das Geschoß als auch die Segmente in einem gegenseitigen Berührungsbereich mit miteinander korrespondierenden Formschlußmitteln versehen.

Dieses bekannte Verfahren ist sowohl bezüglich des Werkstoffbedarfs wie auch der erforderlichen Bearbeitung aufwendig. Außerdem muß jedes Segment entsprechend seiner Zuordnung zu einer bestimmten Treibkäfiganordnung einzeln gekennzeichnet werden, um ein Verwechseln der Segmente auszuschließen.

Die US-A-2 968 246 zeigt ebenfalls bereits einen Treibkäfig, aufgebaut aus Segmenten mit ggf. zwischen ihnen angeordneten Teilfugen, die durch Einlagen aus Fasermaterial gefüllt sein können und die im hinteren Bereich durch zusätzliche Verschlußstücke geschlossen sind. Dieser Treibkäfig ist aber innerhalb einer Hülse angeordnet. Eine einfache Herstellung im Sinne der vorliegenden Anmeldung ist somit nicht möglich. Außerdem ist er nur für ein Drallgeschoß einsetzbar, da er in Flugrichtung nach vorne hin keine Öffnung aufweist, in die die anströmende Luft zum Auseinanderdrücken der Segmente eintreten könnte.

Aus der LU-A-57 539 ist ein Treibkäfig eines Gewehrgeschosses, der zwischen Sicken einer Geschoßhülse mittels eines zusätzlichen Treibkäfigbodens eingeklemmt ist, bekannt. Hier weist der Treibkäfig, der aus Segmenten besteht, nach vorne hin offene Schlitze auf, die in eine im mittleren Bereich gelegene Druckkammer münden. Auf die einfache Form des Treibkäfigs aus wenigen Einzelteilen sowie auf das einfache Herstellungsverfahren, entsprechend der Erfindung, ist daraus kein Hinweis zu entnehmen.

Aus der GB-A-2 027 855 ist bekannt, einen Treibkäfig aus unterschiedlichen Materialien in einem zweistufigen Gießverfahren herzustellen. Auch daraus ist auf die einfache Form des Treibkäfigs sowie auf das einfache Herstellungsverfahren der Erfindung kein Hinweis zu entnehmen.

Aufgabe der Erfindung ist es einen Treibkäfig der eingangs genannten Art derart zu verbessern, daß er aus wenigen Einzelteilen besteht und in einfacher Weise entweder aus einem einzigen Rohling herstellbar ist, oder durch Umgießen von, ggfs. auf einen Formkern angeordneten, radial und axial ausgerichteten Platten herstellbar ist.

Die zur Lösung der gestellten Aufgabe notwendigen, wesentlichen Merkmale sind im Patentanspruch 1 genannt. Die Unteransprüche nennen Ausführungsarten der Erfindung.

Durch die Erfindung werden gegenüber dem Stand der Technik Werkstoffverluste vermieden und der Bearbeitungsaufwand gesenkt. Durch die Vereinfachung des Treibkäfigkörpers ergibt sich eine Gewichtsverminderung.

Die Vereinfachung ergibt sich im wesentlichen aus der Einstückigkeit und der Vorsegmentierung des Treibkäfigkörpers. Die Anzahl der Segmente kann über bisher übliche vergrößert sein.

Die Zeichnung zeigt Ausführungsformen der neuen Treibkäfiganordnung.

Es zeigt :

Figur 1 eine erste Treibkäfiganordnung nach der Erfindung mit drei Segmenten in Draufsicht,

Figur 2 die erste Treibkäfiganordnung im frontalen Aufriß in Richtung eines Pfeils II in Figur 1,

Figur 3 die erste Treibkäfiganordnung im längsaxialen Schnitt nach der Linie III-III in Figur 2,

Figur 4 im seitlichen Aufriß ein Element zum Einbringen in eine jeweilige Trennfuge der ersten Treibkäfiganordnung nach den Figuren 1 bis 3,

Figur 5 eine zweite Treibkäfiganordnung nach der Erfindung mit drei Segmenten im längsaxialen Schnitt,

Figur 6 eine dritte Treibkäfiganordnung mit sechs Segmenten im frontalen Aufriß,

Figur 7 die dritte Treibkäfiganordnung im Schnitt entlang der Längsachse nach der Linie VII-VII in Figur 6,

Figur 8 eine der dritten ähnliche vierte Treibkäfiganordnung mit sechs Segmenten im Schnitt quer zur Längsachse nach der Linie VIII-VIII in Figur 7,

Figur 9 die vierte Treibkäfiganordnung im Schnitt quer zur Längsachse nach der Linie IX-IX in Figur 7,

Figur 10 eine fünfte Treibkäfiganordnung mit sechs Segmenten im frontalen Aufriß,

Figur 11 die fünfte Treibkäfiganordnung im längsaxialen Schnitt nach der Linie XI-XI in figur 10,

Figur 12 eine sechste Treibkäfiganordnung mit vier Segmenten im frontalen Aufriß,

Figur 13 die sechste Treibkäfiganordnung im längsaxialen Schnitt nach der Linie XIII-XIII in Figur 12,

Figuren 14 und 15 von zwei weiteren Treibkäfiganordnungen im Ausschnitt eines längsaxialen Schnitts die Ausgestaltung eines rückwärtigen Flanschs im mittleren oder hinteren Bereich der Anordnung im längsaxialen Schnitt ausschnittsweise und

Figur 16 einen vorderen Bereich einer Treibkäfiganordnung nach Figur 14 oder Figur 5.

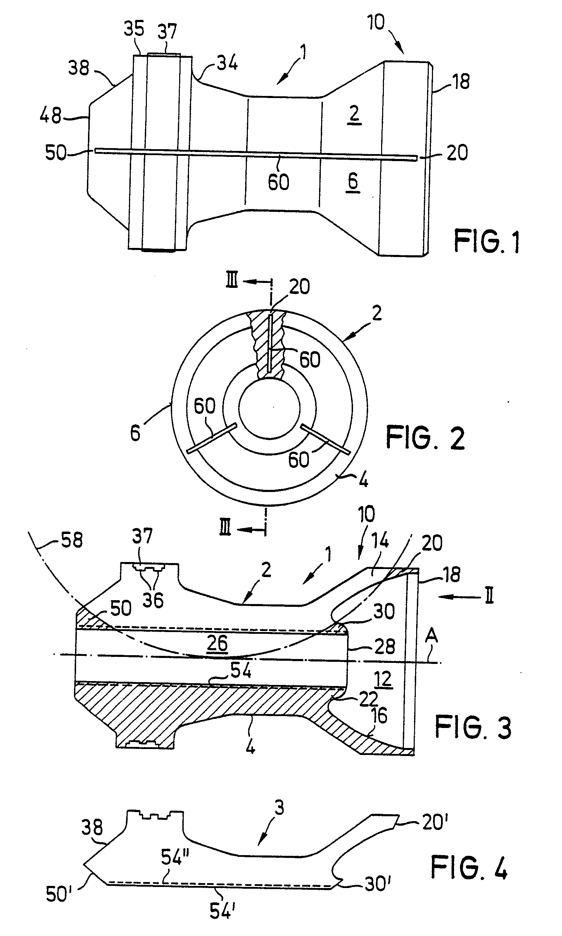

Nach den Fig. 1, 2 und 3 weist ein rotationssymmetrischer Treibkäfigkörper 1 mit einer zentralen Bohrung 26 drei radiale Teilungsfugen 60 auf, welche nach einem Herstellungsverfahren mit einem Schlitzfräser eingebracht werden. In Fig. 3 ist der Umfang 58 eines Schlitzfräsers eingezeichnet. Durch die Teilungsfugen 60 werden drei gleiche Segmente 2, 4 und 6 gebildet. Vorderseitig eines Vorderbereichs 10 ist eine Lufttasche 12 mit einer Außenwand 14 und einer Anströmfläche 16 angeordnet, welche in einer Vorderkante 18 enden. Die Außenwand 14 ist einstückig mit einem Zentralteil 22 verbunden. Der Zentralteil 22 erstreckt sich entlang einer zentralen Längsachse A zwischen einer Vorderkante 28 und einer Hinterkante 48. Ein Flansch 34 ist einstückig mit dem Zentralteil verbunden. Er ist umfangsseitig mit einer zweiteiligen Aufnahmenut 36 für ein Führungs- und/oder Dichtelement 37 versehen. Eine rückseitige Gasdruckaufnahmefläche 38 endet in der Hinterkante 48. Die Teilungsfugen 60 sind derart angeordnet, daß im Bereich der Vorderkante 18 der Lufttasche 12 im Bereich der Vorderkante 28 des Zentralteils 22 und im Bereich der Hinterkante 48 jeweilige Werkstoffbrücken 20, 30 und 50 verbleiben, welche nach der Art von Sollbruchstellen die Einstückigkeit des Treibkäfigkörpers 1 gewährleisten. Zum formschlüssigen Verbinden mit einem nicht dargestellten Fluggeschoß ist die zentrale Bohrung 26 mit einem Gewinde 54 versehen. Um beim Abfeuern den Treibgasen keinen unzulässigen Durchgang durch die Treibkäfiganordnung zu gewähren, werden die Trennfugen 60 mit einer im folgenden als Element 3 bezeichneten Einlage versehen, welche in Fig. 4 dargestellt ist. Das Element 3 ist derart aus einem Blech ausgestanzt, daß es die Kontur des Treibkäfigkörpers 1 im Bereich der jeweiligen Teilungsfugen 60 vervollständigt und sich dabei mit Schmalflächen 20', 30' und 50' an der jeweiligen Werkstoffbrücke 20, 30 und 50 anlegt und sich durch eine nicht näher dargestellte Profilierung 54'' im Bereich einer Schmalfläche 54' das Gewinde 54 vervollständigen kann.

Ein in die als Doppelnut ausgebildete Aufnahmenut 36 eingebrachtes und mit Sollbruchstellen versehenes, geschlossenes Führungsband 37 fixiert das Element 3 in der jeweiligen Teilungsfuge 60.

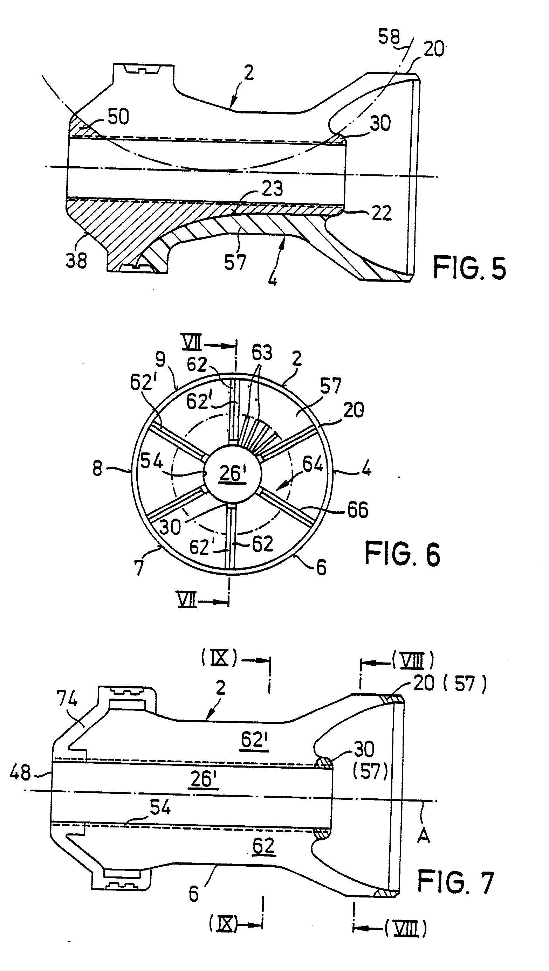

Bei einer in Fig. 5 dargestellten zweiten Treibkäfiganordnung besteht ein geschlossen umlaufender Teil aus Kunststoff 57, welcher mit einem Zentralteil 22 entlang einer Außenfläche 23 (durch Gießen, Spritzen o. dgl.) einstückig verbunden ist. Der Vorderteil verringerten Gewichts verbindet sich mit dem Vorteil der einfachen Fertigung. Elemente 3 sind auch hier in jeweilige von einem Schlitzfräster (Umfang angedeutet durch 58) eingebrachter Teilungsfugen 60 eingelegt. Bei der Anordnung gem. Fig. 5 besteht die vordere Werkstoffbrücke 20 aus Kunststoff.

Gem. Fig. 6 und 7 weist eine dritte Treibkäfiganordnung sechs Segmente 2, 4, 6, 7, 8 und 9 auf. Der Treibkäfigkörper ist aufgebaut aus der Kontur des Treibkäfigkörpers 1 angepaßten Stanzblechen als Elemente 62, 62' und 63 sowie aus Kunststoff 57. Unter Belassung einer zentralen Ausnehmung 26' sind die genannten Stanzbleche derart um eine Längsachse A angeordnet, daß ein jeweiliges Segment von der Oberfläche eines Stanzblechs 62 und 62' begrenzt wird. In einem Stoßbereich 64 sind das Stanzblech 62 (beispielsweise des Segments 9) und das Stanzblech 62' 62' des Segments 2 entlang einer Teilungsfuge 66 einander unmittelbar benachbart angeordnet. Im Bereich der Vorderkante 18 der Lufttasche 12 sowie im Bereich einer Vorderkante 28 in der Nachbarschaft der zentralen Ausnehmung 26' sind die Stanzbleche 62 und 62' derart ausgebildet, daß aus dem Kunststoff 57 die Werkstoffbrücken 20 und 30 gebildet sind. Wie in Fig. 7 dargestellt, können die Umfangsfläche 35, die Gasdruckaufnahmefläche 38, die hintere Kante 48 sowie die Doppelnut 36 zur Aufnahme des Dichtungsbandes 37 an einem Abdeckelement 74 angeordnet sein, welches, mit nicht dargestellten Sollbruchstellen versehen, den heckseitigen Abschluß der Anordnung bildet.

Vorteilhafterweise kann das Abdeckelement 74 als « verlorene » Einbaulehre für die Stanzbleche 62, 62' und 63 ausgebildet und als solche bei einem anderen Herstellungsverfahren unmittelbar in eine nicht dargestellte Gieß- oder Spritzform eingebracht werden. Die dem Kunststoff 57 zugewandten Flächen der Abdeckbleche 62, 62' und 63 sind durch chemische oder andere Behandlung, beispielsweise Tauchbeschichtung, zur besonders innigen Klebverbindung mit dem aushärtbaren (auch Kunststoff 57) genannten Füllstoff vorbereitet. Im Bereich ihren, der zentralen Ausnehmung 26' zugewandten Schmalflächen, sind die Stanzbleche mit nicht dargestellten Ausnehmungen versehen, welche sich gegenseitig zu Teilen eines Gewindes 54 ergänzen. Beim Ausgießen bzw. -spritzen mit aushärtbarem Kunststoff 57 wird in der zentralen Ausnehmung 26' ein mit einem Außengewinde wie demjenigen des Geschosses versehener und als Formkern wirkender Körper eingesetzt. Auf diese Weise läßt sich das Gewinde 54 ohne Unterbrechungen ausbilden.

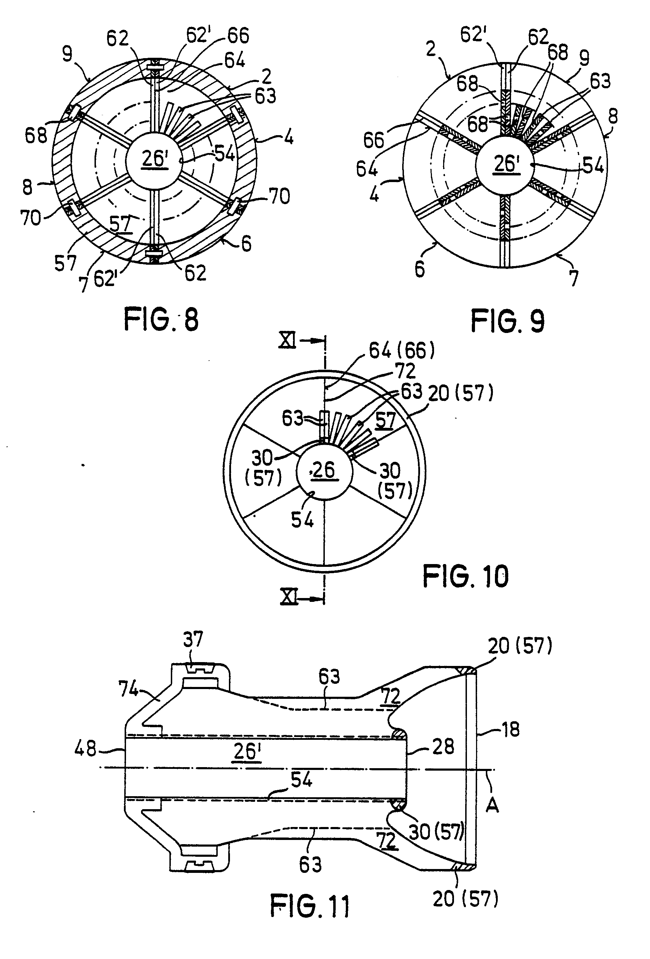

Eine in den Fig. 8 und 9 dargestellte vierte Treibkäfiganordnung mit sechs Segmenten unterscheidet sich von der beschriebenen dritten An-

ordnung insbesondere dadurch, daß in den Stanzblechen 62, 62' und 63 Bohrungen 68 vorgesehen sind. Im vorderseitigen und umfangsnahen Bereich dienen die Bohrungen 68 in den Stanzblechen 62 und 62' der Aufname eines schematisch dargestellten glatten Verbindungselements 70, welches die Bleche 62, 62' vor dem Ausgießen zusammenhält und eine zusätzliche Werkstoffbrücke bildet. In den rückwärtigen Bereichen dienen die Bohrungen 68 der Aufnahme des aushärtbaren Kunststoffs 57 zum Gewährleisten einer besonders innigen Verbindung zwischen Blechen und Kunststoff. Mit dem vergleichsweise weitergehenden Werkstoffaustausch wird eine Gewichtsverminderung erzielt.

Ein noch weitergehender Werkstoffaustausch ist in einer fünften Treibkäfiganordnung nach den Fig. 10 und 11 verwirklicht. Auch im jeweiligen Stoßbereich 64 unterscheiden sich die Stanzbleche nicht von den übrigen. In einer sich radial erstreckenden Fortsetzung der Teilungsfuge 66 ist als Einlage beispielsweise ein Element 72 als dünne Metallfolie angeordnet. Sie ist so zugeschnitten, daß sich im Bereich der Vorderkante 18 die Werkstoffbrücke 20 aus aushärtbarem Kunststoff 57 ausbilden kann.

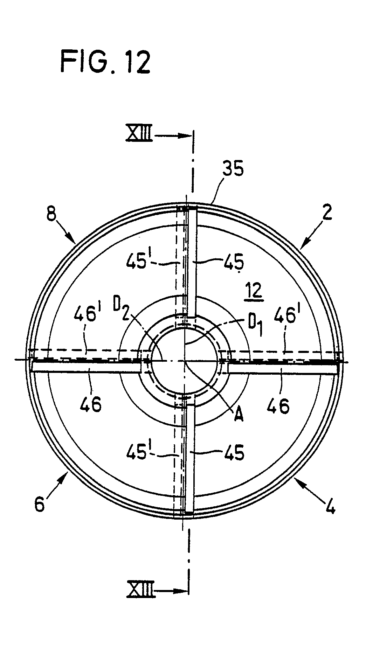

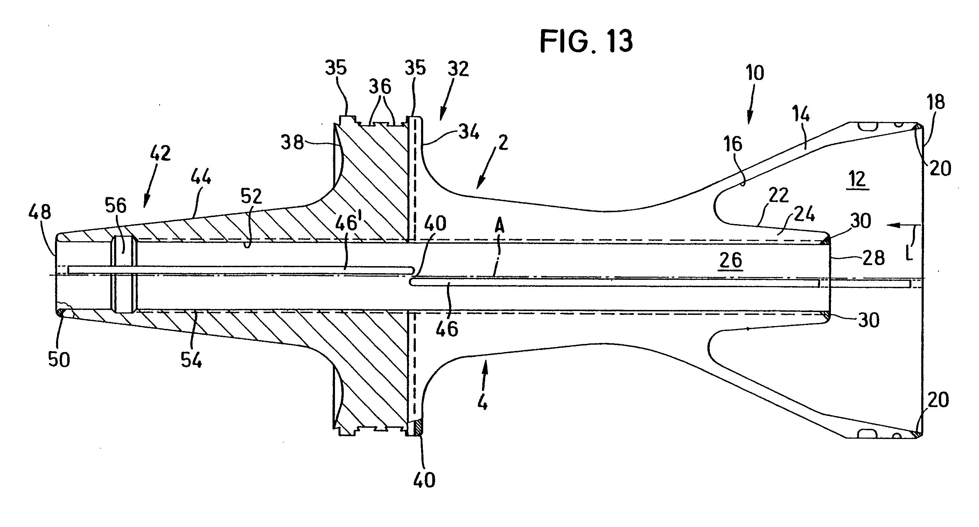

Die in Fig. 12 und 13 dargestellte sechste Treibkäfiganordnung weist in einem Vorderbereich 10 eine Lufttasche 12 mit einer Außenwand 14 und einer Anströmfläche 16 auf, welche in einer Vorderkante 18 endet. Die Außenwand 14 ist einstückig mit einer Wandung 24 eines Zentralteils 22 verbunden. Der Zentralteil 22 erstreckt sich entlang einer zentralen Längsachse A zwischen einer Vorderkante 28 und einer Hinterkante 48 und weist eine zentrale Bohrung 26 auf. In einem mittleren Bereich 32 der Treibkäfiganordnung ist ein mit der Wand 24 des Zentralteils 22 einstückig verbundener Flansch 34 angeordnet. Der Flansch ist umfangsseitig mit einer Aufnahmemut 36 für ein Führungs- und/oder Dichtelement 37 versehen. Eine rückseitige Gasdruckaufnahmefläche 38 verläuft in eine Außenfläche 44 eines Heckbereichs 42 des Zentralteils 22. Teilungsfugen 45, 45' und 46, 46' unterteilen den Treibkäfigkörper in vier Segmente 2, 4, 6 und 8, wobei im Bereich der Vorderkanten 18 und 28, des Flanschumfangs 35 und der Hinterkante 30 Werkstoffbrücken 20, 30, 40 und 50 belassen sind. Diese Werkstoffbrücken verbinden aneinanderstoßende Segmente in nicht näher bezeichneten Bereichen und wahren die Einstückigkeit des Treibkäfigkörpers. Eine Umfangsfläche 52 der Bohrung 26 ist mit einem Gewinde 54 versehen, welches rückseitig in einer Ausdrehung 56 endet ; dieses dient dem Formschluß zwischen einem von der Bohrung 26 aufzunehmenden Geschoß und dem Treibkäfig. Die Werkstoffbrücken 20, 30, 40 und 50 sind als Sollbruchstellen (zwischen den aneinanderstoßenden Segmenten) derart vorgesehen, daß sie nach dem Verlassen eines betreffenden Waffenrohrs unter der Wirkung in Richtung eines Pfeils L anströmender Luft zerbrechen, so daß sich die Segmente 2, 4, 6 und 8 nun einzeln von einem nicht dargestellten Geschoß trennen und zu Boden fallen können.

Das dargestellte Ausführungsbeispiel weist eine gerade Zahl von Segmenten auf. Hierdurch ist es auf einfache Weise möglich, jeweils zwei Teilungsfugen (sie liegen in einer zu einem Durchmesser $D_1$ ($D_2$) parallelen Ebene) mit einem jeweiligen Trennschnitt, beispielsweise mittels einer Bandsäge, einzubringen.

Ein bei dem bisher üblichen Verfahren erforderlicher hoher Aufwand im Zusammenang mit den Teilungsfugen zwischen aneinander anstoßenden Segmenten entfällt ; eine mindesterforderliche Genauigkeit ist im wesentlichen nur noch bei der Dimensionierung der jeweiligen Werkstoffbrücken erforderlich.

Durch Erhöhung der Anzahl der Treibkäfigsegmente wird die Masse des jeweiligen Segments verringert. Hierdurch wird das Ablösen vom Geschoß erleichtert. Außerdem soll ein störender Einfluß auf das Geschoß bei dessen nicht beabsichtigter gegenseitiger Berührung mit einem der Segmente nach der bestimmungsgemäßen Zerlegung des Treibkäfigs verringert werden.

Um den Treibgasen den Durchtritt durch die Trennfugen 45, 45', 46, 46' noch besser zu verwehren, kann ein die Gasdruckaufnahmefläche 38 und die sich anschließende Außenfläche 44 wenigstens im Bereich der Trennfugen bedeckender Überzug vorgesehen sein, der analog dem Abdeckelement 74 gestaltet sein kann.

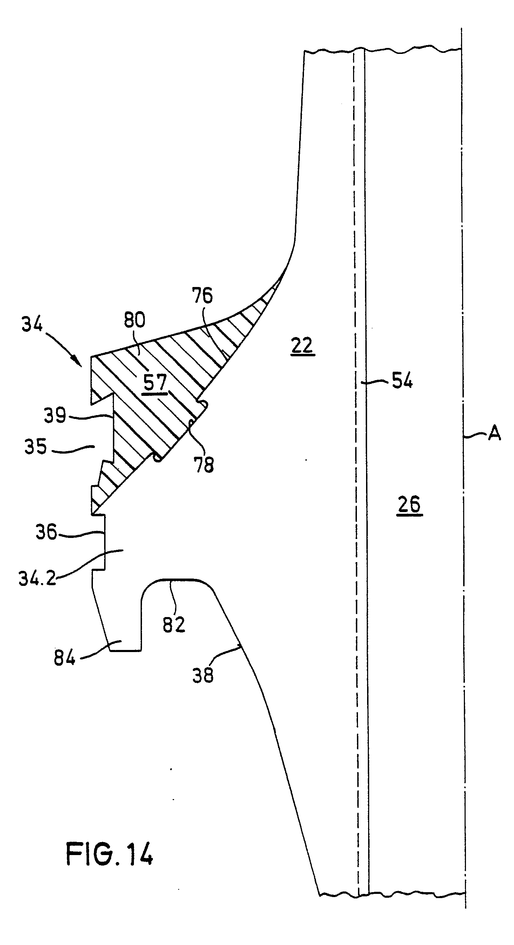

Die Fig. 14, 15 und 16 zeigen weitere Treibkäfiganordnungen in Werkstoffverbundausführung. Gem. Fig. 14 weist der aus einer Leichtmetallegierung gefertigte Zentralteil 22 auf der vorderen Seite des rückwärtigen Flanschs 34 eine Fläche 76 mit einer Schwalbenschwanznut 78 auf. Ein Ring 80 aus Kunststoff 57 bedeckt die Fläche 76 und erstreckt sich unterseitig in die Schwalbenschwanznut 78. Zusammen mit einem Teil 34.2 aus der Leichtmetallegierung bildet der Ring 80 den rückwärtigen Flansch 34. Auf dem Flanschumfang 35 ist in dem Ring 80 eine Ausnehmung 39 vorgesehen, während sich im Teil 34.2 eine Aufnahmenut 36 für ein nicht dargestelltes Führungsband befindet. Die Gasdruckaufnahmefläche 38 setzt sich in einer Ausdrehung 82 fort, welche außenseitig von einem Vorsprung 84 begrenzt wird.

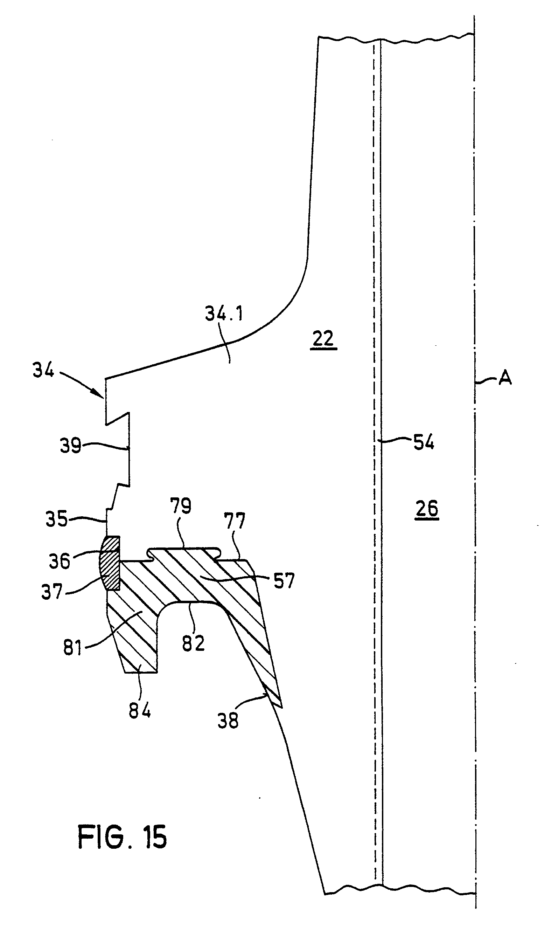

Bei der Anordnung nach Fig. 15 besteht ein vorderer Teil 34.1 des rückwärtigen Flanschs 34 mit einer umfangsseitigen Ausnehmung 39 aus der Leichtmetallegierung des Zentralteils 22 und ist auf einer Rückseitenfläche 77 mit einer Schwalbenschwanznut 79 versehen. Die Fläche 77 ist gegenüber der Gasdruckaufnahmefläche 38 durch Hinterdrehung abgesetzt und nimmt einen Ring 81 aus Kunststoff 57 auf, welcher sich vorderseitig in die Schwalbenschwanznut 79 hinein erstreckt. Die Aufnahmenut 36 erstreckt sich sowohl in den Vorderteil 34.1 wie auch in den Ring 81, so daß durch ein Führunbsband 37 eine zusätzliche Verbindung zwischen den betreffenden Teilen gegeben ist. Die Gasdruckaufnahmefläche 38 setzt sich in die Ausdrehung 82 fort, welche außenseitig von dem Vorsprung 84 begrenzt wird.

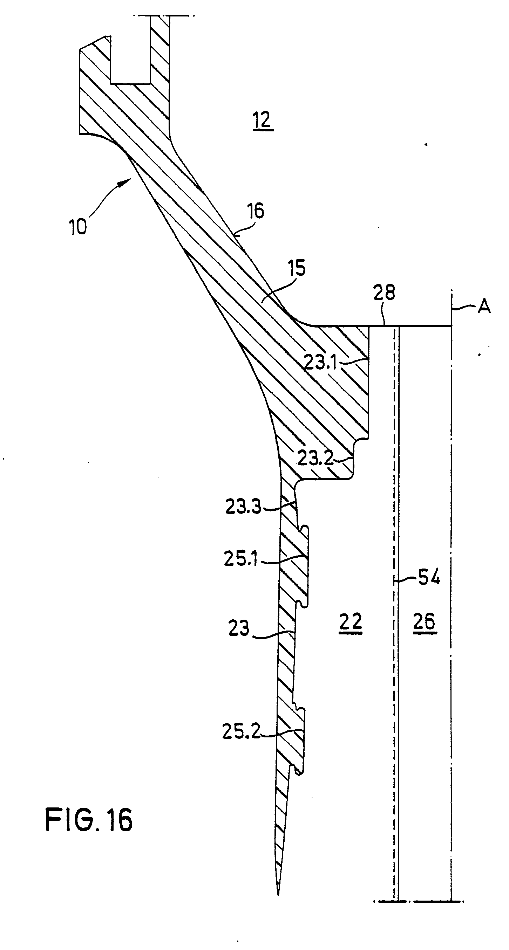

Eine Vorderteilgestaltung nach Fig. 16 kann sowohl mit der Anordnung nach Fig. 14 wie auch Fig. 15 kombiniert werden. Der Zentralteil 22 aus einer Leichtmetallegierung weist eine aus Absätzen 23.1 bis 23.3 gebildete Außenfläche 23 mit Schwalbenschwanznuten 25.1 und 25.2 auf. Der Vorderteil 10 ist aus Kunststoff 57 gestaltet, wobei eine Außenwand 15 mit der Anströmfläche 16 die Lufttasche 12 außenseitig begrenzt und sich rückseitig über den Umfang in den nicht mehr abgebildeten mittleren Bereich erstreckt und auf den Absätzen 23.1 bis 3 und in den Schwalbenschwanznuten 25.1 und 2 auf dem Zentralteil 22 festgelegt ist.

Bei der Gestaltung der Rohlinge wird ein möglichst geringer Bearbeitungsaufwand angestrebt. Beispielsweise kann bei der Anordnung mit einem Treibkäfigkörper, dessen Zentralteil einstückig aus Metall bestehen, der betreffende Rohling vorgelocht und dann verfestigend verformt werden. Eine spanende Bearbeitung läßt sich auf ein Mindestmaß beschränken: bei Anordnung mit einem Treibkäfigkörper in Ganzmetallausführung auf das Fertigbearbeiten der Umfangsfläche, das Einbringen der Nuten für ein jeweiliges Führungsband und das Vorsegmentieren, beim Verbund mit Kunststoff auf das Einbringen von Schwalbenschwanznuten zur besseren Verbindung zwischen Metall und Kunststoff und das Vorsegmentieren.

Die Werkstoffwahl wird durch die Forderung nach ausreichender mechanischer Festigkeit bei möglichst geringer Dichte bestimmt. Für Anordnungen, bei denen wenigstens der Zentralteil einstückig aus Metall gefertigt ist, empfiehlt sich hierfür eine Leichtmetallegierung, beispielsweise auf der Basis von Aluminium oder Titan. Bei den Anordnungen mit Stanzblechen kann, wenigstens teilweise, Stahl der Werkstoff der Wahl sein. Als Kunststoff empfiehlt sich beispielsweise ein Epoxidharz, welches mit Fasern aus Glas, Kohlenstoff oder Kunststoff verstärkt sein kann. Auch können die Teilungsfugen 45, 46, 60 durch Ausgießen mit einem gießfähigen und aushärtenden Werkstoff gasdicht verschlossen werden.

Bezugszeichenliste

1 Treibkäfigkörper
2 Segment
3 Element
4, 6, 7, 8, 9 Segment
10 Vorderbereich von 1
12 Lufttasche
14 Außenwand
15 Außenwand
16 Anströmfläche
18 Vorderkante
20 Werkstoffbrücke
20' Schmalfläche an 3
22 Zentralteil
23 Außenfläche
23.1, 2, 3 Absatz
24 Wand von 22
25.1, 2 Schwalbenschwanznut

26 zentrale Bohrung
26' zentrale Ausnehmung
28 Vorderkante von 22
30 Werkstoffbrücke
30' Schmalfläche an 3
32 mittlerer Bereich von 1
34 Flansch
34.1 Vorderteil
34.2 rückseitiger Teil
35 Umfang von 34
36 Aufnahmenut
37 Führungsband/Dichtungselement
38 Gasdruckaufnahmefläche
39 Ausnehmung
40 Werkstoffbrücke
42 Heckbereich
44 Außenfläche
45, 45' Teilungsfuge
46, 46' Teilungsfuge
48 Hinterkante
50 Werkstoffbrücke
50' Schmalfläche an 3
54 Gewinde in Formschlußzone
54' Schmalfläche an 3
54" Profilierung von 54'
56 Ausdrehung
57 Kunststoff
58 Umfang eines Schlitzfräsers
60 Teilungsfuge (durch 58 eingebracht)
62, 62' Stanzblech
63 Stanzblech
64 Stoßbereich
66 Teilungsfuge
68 Bohrung
70 Verbindungselement
72 Trennmittel
74 Abdeckelement
76 Fläche
77 Rückseitenfläche
78 Schwalbenschwanznut
79 Schwalbenschwanznut
80 Ring aus Kunststoff
81 Ring aus Kunststoff
82 Ausdrehung (Kehle)
84 Vorsprung
A zentrale Längsachse (Rotationsachse)
$D_1$ Durchmesser
$D_2$ Durchmesser

**Patentansprüche**

1. Treibkäfig für ein flügelstabilisiertes unterkalibriges Fluggeschoß großen Länge/Durchmesser-Verhältnisses mit von einer zentralen Bohrung (26) ausgehenden axial und radial gerichteten flachen Elementen (3, 62, 62') z. B. gestanzten Blechen, welche Teile der Innenkontur des Treibkäfigs bilden und dort erste Formschlußmittel zum Zusammenwirken mit zweiten Formschlußmitteln am Fluggeschoß aufweisen und mit Kunststoffmitteln zum Zusammenhalten der Elemente sowie mit Mitteln zum Abdichten des Treibkäfigs gegen das Durchtreten der Treibgase und mit Mitteln zum Lösen der Elemente vom Fluggeschoß sobald dieses das Waffenrohr verlassen hat, gekennzeichnet durch die Merkmale :

a) die Elemente (3, 62, 62') weisen durchgehend gleiche Wandstärken auf und sind mit vorgebbarem Teilungswinkel um die zentrale Bohrung herum angeordnet,

b) die Elemente (3, 62, 62') befinden sich in axial und radial gerichteten Teilungsfugen eines Käfigkörpers, vorzugsweise aus einem härtbaren Füllstoff oder aus einer Metallegierung, der im vorderen Bereich zum Lösen der Elemente eine muldenförmige Lufttasche aufweist, die als Sollbruchstellen in einem vorderen Innenbereich und einem äußeren Außenbereich Werkstoffbrücken (20, 30) und in einem hinteren Innenbereich Werkstoffbrücken 50 aufweist, die die äußeren Enden der flachen Elemente (3, 62, 62') umfassen,

c) die Elemente (3, 62, 62') sind mit dem Käfigkörper gasdicht verbunden (Fig. 4, 6).

2. Treibkäfig nach Anspruch 1, dadurch gekennzeichnet, daß zwischen benachbarten Elementen (3, 62, 62') weitere radial und axial gerichtete flache Elemente (63), die ggf. schmaler als die ersten Elemente sind, im Werkstoff des Käfigkörpers eingebettet liegen (Fig. 8, 10).

3. Treibkäfig nach Anspruch 1 oder 2, dadurch gekennzeichnet, daß je zwei flache Elemente (62, 62') im Stoßbereich (24) entlang einer radialen Teilungsfuge (66) unmittelbar aneinanderliegend angeordnet sind und jeweils ein flaches Element (62') im Bereich einer Teilungsfuge mit einem weiteren flachen Element (62) der benachbarten Teilungsfuge zusammen mit dem dazwischenliegenden Kunststoff (54) je ein Treibkäfigsegment (2-9) bilden (Fig. 2, 8).

4. Treibkäfig nach Anspruch 1 oder 2, dadurch gekennzeichnet, daß die Teilungsfuge durch die schmaleren Elemente (63) und ein Trennmittel (72) vorzugsweise eine Folie gebildet ist (Fig. 11).

5. Treibkäfig nach Anspruch 3 oder 4, dadurch gekennzeichnet, daß die flachen Elemente (62, 62') mit Bohrungen (68) versehen sind, in denen glatte Verbindungselemente als Werkstoffbrücken (70) angeordnet sind (Fig. 8).

6. Treibkäfig nach Anspruch 1, mit einem zum Vorsegmentieren spanabhebend geschlitzten einstückigen Körper, wobei jeder Schlitz im rückseitigen Teil des Körpers in der Nachbarschaft einer Gasdruckaufnahmefläche einen ungeschlitzten Bereich als eine Sollbruchstelle bildende Werkstoffbrücke aufweist und die Formschlußmittel in Form eines Gewindes zwischen dem Treibkäfig und dem Geschoßumfang vorgesehen sind, dadurch gekennzeichnet, daß die Schlitze (45, 46, 60) in der Form in den Körper (1) eingebracht sind, daß im vorderen Bereich (10) an der Vorderkante (18) der Lufttasche (12) und im geschoßnahen Bereich oder in diesen Bereichen und im axial mittleren Bereich (32) des Körpers weitere Werkstoffbrücken (20, 30, 40) angeordnet sind, wobei die Schlitze zur Abdichtung mit Elementen (3) aus Blech oder einem gießfähigen und härtbaren Kunststoff ausgefüllt sind (Fig. 1-4).

7. Treibkäfig nach Anspruch 6, dadurch gekennzeichnet, daß die im axial mittleren Bereich (32) des Körpers (1) vorgesehene weitere Werkstoffbrücke (40) durch gegeneinander angeordnete Schlitze (45, 45', 46, 46') gebildet ist (Fig. 12, 13).

8. Treibkäfig nach Anspruch 6 oder 7, dadurch gekennzeichnet, daß der Treibkäfigkörper aus einem Kunststoffmantel (57) und einem von ihm wenigstens teilweise eingehüllten Zentralteil (23) aus Leichtmetall besteht, welche beiden Teile durch von außen eingebrachte Schlitze (60) gemeinsame Treibkäfigsegmente (2, 4, 6) bilden, wobei die Schlitze (60) derartig angeordnet sind, daß die Treibkäfigsegmente (2, 4, 6) durch eine weitere Werkstoffbrücke (20) an der Vorderkante (18) aus Kunststoff miteinander verbunden sind und die Schlitze (60) zur Abdichtung mit Blechelementen (3) ausgefüllt sind, welche gemeinsam mit dem Zentralteil (22) Formschlußmittel in Form eines Gewindes (54) bilden (Fig. 5).

9. Treibkäfig nach einem der Ansprüche 6 bis 8, dadurch gekennzeichnet, daß die Werkstoffbrücken (20, 30, 50) im Bereich des jeweiligen Schlitzes (60) eine dem Umfang eines Schlitzfräsers entsprechende Anlagefläche für das Blechelement (3) enthalten (Fig. 3 + 5).

10. Treibkäfig nach einem der Ansprüche 6 bis 9, dadurch gekennzeichnet, daß der einteilige Käfigkörper entweder aus einem einheitlichen Werkstoff, z. B. einer Metallegierung oder einem aushärtbaren Kunststoff besteht, oder daß er nur im geschoßseitigen Formschlußbereich aus einem Werkstoff, z. B. der Leichtmetallegierung, und in einem sich längsaxial oder radial erstreckenden Grenzflächenbereich, insbesondere im Umfangsflächenbereich oder im Bereich von Vorsprüngen, aus einem aushärtbaren Werkstoff, z. B. Kunststoff geringerer Dichte, als der Werkstoff im Formschlußbereich besteht (Fig. 14, 15).

11. Treibkäfig nach Anspruch 10, dadurch gekennzeichnet, daß der Kunststoffmantel (57) im Bereich der Treibkäfigsegmente (2, 4, 6) jeweils außenseitig umlaufend geschlossen ist und innenseitig mit einer das Gewicht des Zentralteils (22) stetig reduzierenden Zentralteilaußenfläche (23) verbunden ist, wobei der Durchmesser der Außenfläche (23) in einem von einem hinteren kalibergleichen Dichtelement (35) des Zentralteils (22) bis zur vorderen Metallbrücke (30) reichenden Längenbereich kontinuierlich abnimmt (Fig. 16).

12. Treibkäfig nach einem der Ansprüche 1 bis 11, dadurch gekennzeichnet, daß die Gasdruckaufnahmefläche (38) des Käfigkörpers (1) mit einem die zentrale Ausnehmung (26') der zentralen Bohrung (26) eng umschließenden, Sollbruchstellen aufweisenden Abdeckelement (74) abgedeckt ist, das ggf. auch die Aufnahmenut (36) für ein Führungsband (37) als Dichtelement aufweist (Fig. 7, 11).

13. Verfahren zum Herstellen eines segmentierbaren Treibkäfigs mit den Merkmalen eines der Ansprüche 1 bis 5 unter Verwendung gestanzter Bleche, welche Teile der Innenkontur des Treibkäfigs bilden und dort erste Formschlußmittel (54) zum Zusammenwirken mit zweiten Formschlußmitteln am Fluggeschoß aufweisen und die radial oder nahezu radial um das Fluggeschoß herum angeordnet sind, gekennzeichnet durch folgende Verfahrensschritte :

a) die Bleche (62, 62', 63) werden zur innigen Verbindung mit einem aus dem fließfähigen Zustand aushärtgbaren Füllstoff (57) geringerer Dichte als des Werkstoffs der Bleche vorbereitet,

b) die Bleche (62, 62', 63) werden mit ihren die ersten Formschlußmittel (54) aufweisenden Innenflächen mit radialem Abstand von einer zentralen Achse (A), welche im wesentlichen dem Fluggeschoßradius entspricht, derart angeordnet, daß jedes Blech mit dem ihm benachbarten Blech in einer Projektionsebene, auf welcher die Zentralachse (A) senkrecht steht, einen vorgebbaren Winkel einschließt,

c) wenigstens entlang zweier Ebenen, welche — bezogen auf die Zentralachse (A) — einen Winkel von 180° einschließen, werden jeweils zwei Bleche (62, 62') in einem Stoßbereich (64) unmittelbar aneinander gelegt,

d) benachbarte Bleche (62, 62', 63) werden unter Ausfüllung eines jeweiligen Zwischenraumes mit dem aushärtbaren Füllstoff (57) miteinander verbunden,

e) die Stoßbereiche (64) bilden nach dem Aushärten des Füllstoffs (57) die Trennfugen (66) zwischen jeweiligen Segmenten (2, 4, 6, 7, 8, 9) des Treibkäfigs, wobei

f) Mittel (20, 30 und 37 bzw. 50) vorgesehen sind, welche die Stoßbereiche (64) vorgebbar, und spätestens nach dem Verlassen eines Waffenrohres lösbar, überbrücken.

14. Verfahren nach Anspruch 13, dadurch gekennzeichnet, daß in die Bleche (62, 62', 63) Bohrungen (68) eingebracht werden, welche von dem aushärtbaren Füllstoff (57) ausgefüllt werden, wobei letzterer die Mittel (68) zum Überbrücken des jeweiligen Stoßbereichs (64) bildet.

15. Verfahren nach Anspruch 13 oder 14, gekennzeichnet durch folgende Verfahrensschritte :

a) der Füllstoff (57) wird derart eingebracht, daß er die Bleche (63) außenseitig als Mittel (20, 30 und ggf. 50) zum Überbrücken umgibt,

b) in den Füllstoff (57) werden zum Erzielen der Trennfugen (66) Trennmittel (72) eingebracht, wobei

c) die Trennmittel (72) derart ausgebildet sind, daß sie die Bildung der Überbrückungsmittel zwischen einander benachbarten Segmenten (2, 4, 6, 7, 8, 9) aus dem Füllstoff (57) ermöglichen.

16. Verfahren nach Anspruch 15, dadurch gekennzeichnet, daß als Trennmittel (72) eine Folie entsprechenden Zuschnitts vorgesehen ist.

17. Verfahren zum Herstellen eines segmentierbaren Treibkäfigs mit den Merkmalen des Anspruchs 1 oder eines der Ansprüche 6 bis 12, unter Verwendung von im Treibkäfigkörper eingebrachter flacher Elemente, welche Teile der Innenkontur des Treibkäfigs bilden und dort erste Formschlußmittel (54) zum Zusammenwirken mit zweiten Formschlußmitteln am Fluggeschoß aufweisen und die radial oder nahezu radial um das Fluggeschoß angeordnet sind, dadurch gekennzeichnet, daß in einen einstückigen Treibkäfigkörper (1) von außen her Schlitze (45, 46, 60) spanabhebend derart eingebracht werden, daß nicht nur im axial hinteren Teil des Treibkäfigkörpers in der Nachbarschaft einer Gasdruckaufnahmefläche (38) ein ungeschlitzter Bereich als eine eine Sollbruchstelle bildende Werkstoffbrücke (50) bestehen bleibt, sondern auch im axial vorderen Bereich (11) an der Vorderkante (18) einer Lufttasche (12) und im geschoßnahen Bereich und ggf. auch im axial mittleren Bereich (32) des Treibkäfigkörpers weitere Werkstoffbrücken (20, 30, 40) stehenbleiben, und daß danach in die Schlitze (45, 46, 60) von außen her flache Einlagen aus Blech oder einem gießfähigen und aushärtbaren Werkstoff eingeführt werden, deren Oberfläche so behandelt ist, daß sie sich abdichtend mit den Schlitzwänden verbindet (Fig. 1-4).

## Claims

1. Sabot for a fin-stabilized sub-calibre missile having a high length-top-diameter ratio and axially and radially orientated flat elements (3, 62, 62') such as stamped plates extending from a central boring and forming parts of the internal contour of the sabot and provided in this position with first interlock means designed to interact with second interlock means on the missile, and with plastic means serving to hold the elements together, together with means for preventing the propellant gases from passing through the sabot, and with means for detaching the elements from the missile as soon as the latter has left the barrel of the weapon, characterized by the following features :

a) the elements (3, 62, 62') are of the same wall thickness throughout and are positioned around the central boring at a preselectable pitch angle,

b) the elements (3, 62, 62') are situated in axially and radially orientated joints of a cage body, preferably of a hardenable filling material or of a metal alloy, which is equipped in the front zone, for the detachment of the elements, with a trough shaped air compartment, which is provided with preset breaking points in a front internal zone and an outer external zone, formed by material bridges and in a rear internal zone with material bridges (50) which surround the outer ends of the flat elements (2, 62, 62').

c) the elements (3, 62, 62') are connected to the cage body in a gas tight manner (Figure 4, 6).

2. Sabot in accordance with Claim 1, characterized by the fact that between adjacent elements (3, 62, 62') further radially and axially orientated flat elements (63), which may be narrower that the first elements, are embedded in the material of the cage body (Figure 8, 10).

3. Sabot in accordance with Claim 1 or 2, characterized by the fact that in each case two flat elements (62, 62') are positioned directly adjacent to each other in the joint zone (24) along a radial joint (66), while one flat element (62') where the joint occurs between it and a further flat element (62) of the adjacent joint, forms a sabot segment (2-9) in conjunction with the intermediately situated plastic material (54) (Figure 2, 8).

4. Sabot in accordance with Claim 1 or 2, characterized by the fact that the joint is formed by the narrower elements (63) and a separating means (72) preferably a foil (Figure 11).

5. Sabot in accordance with Claims 3 or 4, characterized by the fact that the flat elements (62, 62') are provided with borings (68) containing flat connecting elements as material bridges (70) (Figure 8).

6. Sabot in accordance with Claim 1, characterized by the fact that with a single-piece body formed with slits by a chip-removing process for the purpose of presegmentation, each slit being provided, in the rear part of the body, in the vicinity of a gas-pressure receiving surface, with an unslit zone as a material bridge forming a preset breaking point, the interlock means being provided in the form of a screw-threading between the sabot and the periphery of the missile, characterized by the fact that the slits (45, 46, 60) are provided in the body (1) in such a way that in the front zone (10) on the front edge (18) of the air compartment (12), and in the zone nearest to the missile, or in these zones and in the axially central zone (32) of the body, further material bridges (20, 30, 40) are provided, the slits being filled, for sealing purposes, with elements (3) of sheet metal or of a hardenable plastic capable of being cast (Figure 1-4).

7. Sabot in accordance with Claim 6, characterized by the fact that the further material bridge (40) provided in the axially central zone (32) of the body (1) is formed by slits (45, 45', 46, 46') situated against one another (Figure 12, 13).

8. Sabot in accordance with Claim 6 or 7, characterized by the fact that the sabot consists of a plastic casing (57) and of a central part (23) of light metal at least partly encased therein, which two parts form, by means of slits (60) made therein from the ouside, common sabot segments (2, 4, 6), the slits (60) being so arranged that the sabot segments (2, 4, 6) are inter-connected by a further material bridge (20) on the front edge (18) made of a plastic material, the slits (60) being filled, for sealing purposes, with sheet metal elements (3) which in conjunction with the central part (22) provide interlock means in the form of a threading (54) (Figure 5).

9. Sabot in accordance with any one of Claims 6 to 8, characterized by the fact that the material bridges (20, 30, 50) are each provided, in the zone of the relevant slit (60) with a contact surface serving for the sheet metal element (3) and corresponding to the periphery of a slitting cutter (Figure 3, 5).

10. Sabot in accordance with any one of Claims 6 to 9, characterized by the fact that the single-piece sabot body is either made of a uniform material such as a metal alloy, or of a hardenable plastic, or is made of one material, such as the light metal alloy, only in the interlock zone on the side corresponding to the missile, while in a boundary surface zone extending in a longitudinal axial or in a radial direction, and particularly in the peripheral surface zone, it consists of a hardenable material such as a plastic of lower density than the material in the interlock zone (Figure 14, 15).

11. Sabot in accordance with Claim 10, characterized by the fact that the plastic casing (57) in the zone of the sabot segments (2, 4, 6) is in each case closed towards the outside all the way round, while on the inside it is connected with an outer surface (23) of the central part by which the mass of the central part (22) is constantly reduced, the diameter of the outer-surface (23) continuously decreases in a longitudinal zone extending from a rear sealing element (35) belonging to the central part (22) and having the same calibre as far as the front metal bridge (30) (Figure 16).

12. Sabot in accordance with any one of Claims 1 to 11, characterized by the fact that the gas-pressure receiving surface (38) of the cage body (1) is covered by a covering element (74) tightly surrounding the central recess (26') of the central boring (26) and having preset breaking points and possibly also provided with the receiving groove (36) for a guide band (37) as a sealing element (Figure 7, 11).

13. Process for the production of a sabot capable of being segmented, with the characteristics of any one of Claims 1 to 5, using punched plates which form parts of the internal contour of the sabot and provided in that position with interlock means (54) for interaction with second interlock means on the missile and positioned radially or almost radially around the missile, characterized by the following operations :

a) the plates (62, 62' and 63) are prepared, in order to ensure complete connection, with a filling material (57) hardenable from the flowable state and having a lower density than the material of the plates,

b) the plates (62, 62', 63) are positioned with their inner surfaces, having the first interlock means (54) at a radial distance from a central axis (A) mainly corresponding to the radius of the missile, in such a way that each plate, in conjunction with an adjacent plate, in a projection plane to which the central axis (A) is perpendicular, encloses a certain preselectable angle ;

c) along at least two planes which in respect of the central axis (A) enclose an angle of 180° two plates (62, 62') are in each case placed immediately adjacent to each other in a joint zone (64),

d) adjacent plates (62, 62', 63) are interconnected, in which process a gap between each two is filled with the hardenable filler (57),

e) the joint zones (64) after the filler (57) has hardened, form the joints (66) between each two segments (2, 4, 6, 7, 8, 9) of the sabot, while

f) means (20, 30 and 37, 50) are provided by which the joint zones (64) are bridged preselectably and at the latest after the departure from a barrel of the weapon.

14. Process in accordance with Claim 13, characterized by the fact that the plates (62, 62', 63) are provided with borings (68) which are filled with the hardenable filling material (57) this latter in each case forming the means (68) for bridging the joint zone (64) in question.

15. Process in accordance with Claim 13 or 14, characterized by the following operations :

a) the filler (57) is introduced in such a manner that it surrounds the plates (63) on the outside, thus forming a bridging means (20, 30) and possibly (50),

b) separating means (72) are introduced into the filling material (57) in order to produce the joints (66), while

c) the separating means (72) are so designed that they enable the bridging means to be formed between mutually adjacent segments (2, 4, 6, 7, 8, 9) from the filling material (57).

16. Process in accordance with Claim 15, characterized by the fact that the separating means (72) used consist of a foil cut to the required shape and size.

17. Process for the production of a sabot capable of being segmented, with the characteristics of Claim 1 or one of Claims 6 to 12, using flat elements which are introduced into the sabot body and which form parts of the internal contour of the sabot and which in that position are equipped with first interlock means (54) designed to interact with second interlock means on the missile and positioned radially or almost radially around the missile, characterized by the fact that slits (45, 46, 60) are made in a single-piece sabot body (1) from the outside by a chip-removing method and in such a manner that not only in the vicinity of a gas-pressure receiving surface (38) in that part of the sabot body which is farthest to the rear in the axial direction, an unslit zone is left as a material bridge (50) forming a preset breaking point, but in the axially foremost zone (11) of the front edge (18) of an air compartment (12) and in the zone nearest to the missile and posibly also in the axially central zone (32) of the sabot body, further material bridges (20, 30, 40) are preserved, while flat inserts of sheet metal or of hardenable material capable of being cast are thereafter introduced into the slits (45, 46, 60) from the outside, the surface of the said inserts being so treated that it connects with the walls of the slits with a sealing effect (Figure 1-4).

**Revendications**

1. Cage de propulsion pour projectile sous-calibré empenné d'un rapport longueur/diamètre important, comportant des éléments plats (3, 62, 62') dirigés axialement et radialement, partant d'un alésage central (26), par exemple des tôles découpées, qui constituent des parties du contour intérieur de la cage et y comportent de premiers moyens d'accouplement par concordance de forme devant coopérer avec de seconds moyens d'accouplement par concordance de forme se trouvant sur le projectile, et des moyens à matière plastique pour maintenir les éléments ensemble ainsi que des moyens d'étanchéité de la cage contre le passage des gaz de propulsion et des moyens pour détacher les éléments du projectile, dès que celui-ci a quitté le tube de l'arme, caractérisé par les caractéristiques suivantes :

a) les éléments (3, 62, 62') présentent des épaisseurs de paroi partout identiques et sont disposés tout autour de l'alésage central à des intervalles angulaires prédéterminables,

b) les éléments (3, 62, 62') se trouvent dans des joints de séparation, dirigés axialement et radialement, d'un corps, de préférence en une matière de charge durcissable ou en un alliage métallique, qui comporte dans la zone antérieure, pour la séparation des éléments, une poche d'air en forme d'auge qui comporte, en tant qu'emplacements destinés à la rupture, dans une zone intérieure antérieure et une zone extérieure externe, des épaisseurs de matière (20, 30) et dans une zone intérieure postérieure, des épaisseurs de matière 50, qui embrassent les extrémités extérieures des éléments plats (3, 62, 62').

c) les éléments (3, 62, 62') sont reliés de façon hermétique aux gaz au corps de la cage de propulsion (figures 4, 6).

2. Cage de propulsion selon la revendication 1, caractérisée en ce que d'autres éléments plats dirigés radialement et axialement (63), qui sont éventuellement plus étroits que les premiers éléments, sont incorporés dans la matière du corps entre des éléments (3, 62, 62') voisins (figures 8, 10).

3. Cage de propulsion selon la revendication 1 ou 2, caractérisée en ce que les éléments plats (62, 62') sont disposés par paires dans la zone de jonction (24) le long d'un joint radial (66) dans des positions immédiatement contiguës, et en ce que chaque élément plat (62') forme, dans la zone d'un joint, avec un autre élément plat (62) du joint voisin, avec la matière plastique (54) interposée, un segment de cage de propulsion (2-9) (figures 2, 8).

4. Cage de propulsion selon la revendication 1 ou 2, caractérisée en ce que le joint est formé par les éléments (63) plus étroits et un moyen de séparation (72), de préférence une feuille (figure 11).

5. Cage de propulsion selon la revendication 3 ou 4, caractérisée en ce que les éléments plats (62, 62') comportent des perçages (68) dans lesquels sont placés des éléments de liaison lisses constituant des épaisseurs de matière (70) (figure 8).

6. Cage de propulsion selon la revendication 1, comportant un corps d'un seul tenant fendu avec enlèvement de copeaux pour la présegmentation, chaque fente comportant dans la partie postérieure du corps, au voisinage d'une surface de réception de pression gazeuse, une zone non fendue constituant une épaisseur de matière formant une zone destinée à la rupture et les moyens d'accouplement par concordance de forme, en forme de filetage, étant prévus entre la cage et la périphérie du projectile, caractérisée en ce que les fentes (45, 46, 60) sont formées dans le corps (1) de façon que d'autres épaisseurs de matière (20, 30, 40) soient présentes dans la zone antérieure (10) au bord antérieur (18) de la poche d'air (12) et dans la zone proche du projectile ou dans ces zones et dans la zone axialement centrale (32) du corps, les fentes étant, aux fins d'étanchéité, comblées avec des éléments (3) en tôle ou en une matière plastique se prêtant à la coulée et durcissable (figures 1 à 4).

7. Cage de propulsion selon la revendication 6, caractérisée en ce que l'autre épaisseur de matière (40) prévue dans la zone axialement centrale (32) du corps (1) est formée par des fentes (45, 45', 46, 46') en regard (figures 12, 13).

8. Cage de propulsion selon la revendication 6 ou 7, caractérisée en ce que le corps est constitué par une enveloppe de matière plastique (57) et une partie centrale (23) en métal léger entourée au moins partiellement par elle, ces deux parties formant, par des fentes (60) pratiquées de l'extérieur, des segments communs (2, 4, 6), les fentes (60) étant disposées de telle façon que les segments (2, 4, 6) sont reliés entre eux par une autre épaisseur de matière (20) au bord antérieur (18) en matière plastique et les fentes (60) étant, aux fins d'étanchéité, comblées par des éléments de tôle (3) qui forment en commun avec la partie centrale (22), des moyens d'accouplement par concordance de forme conformés en taraudage (54) (figure 5).

9. Cage de propulsion selon l'une des revendications 6 à 8, caractérisée en ce que les épaisseurs de matière (20, 30, 50) comprennent, dans la zone de chaque fente (60), une surface de contact correspondant à la périphérie d'une fraise-scie à trancher pour l'élément de tôle (3) (figures 3-5).

10. Cage de propulsion selon l'une des revendications 6 à 9, caractérisée en ce que le corps d'un seul tenant est constitué par une matière homogène, par exemple, un alliage métallique ou une matière plastique durcissable, ou en ce qu'elle est constituée, seulement dans la zone d'accouplement par concordance de forme située du côté du projectile, par une matière telle que, par exemple, l'alliage métallique léger et, dans une zone de surface limite s'étendant suivant l'axe longitudinal ou radialement, en particulier dans la zone de surface périphérique ou dans la zone de saillies, par une matière durcissable, par exemple une matière plastique, de plus faible densité que la matière de la zone d'accouplement par concordance de forme (figures 14, 15).

11. Cage de propulsion selon la revendication 10, caractérisée en ce que l'enveloppe plastique (57) est fermée périphériquement extérieurement dans la zone de chacun des segments (2, 4, 6) et est reliée intérieurement à une surface extérieure de partie centrale (23) réduisant constamment le poids de la partie centrale (22), le diamètre de la surface extérieure (23) diminuant de façon continue dans un intervalle de longueur allant d'un élément d'étanchéité (35) postérieur de même calibre de la partie centrale (22) à l'épaisseur de métal antérieur (30) (figure 16).

12. Cage de propulsion selon l'une des revendications 1 à 11, caractérisée en ce que la surface de réception de pression gazeuse (38) du corps (1) est recouverte d'un élément de recouvrement (74) comportant des zones destinées à la rupture, enserrant étroitement l'évidement central (26') de l'alésage central (26), qui comporte aussi, éventuellement, la rainure de réception (36) pour une bande de guidage (37) constituant un élément d'étanchéité (figures 7, 11).

13. Procédé de fabrication d'une cage de propulsion segmentable présentant les caractéristiques de l'une des revendications 1 à 5, en utilisant des tôles découpées, qui constituent des parties du contour intérieur de la cage et y comportent de premiers moyens d'accouplement par concordance de forme (54) pour coopérer avec de seconds moyens d'accouplement par concordance de forme situés sur le projectile et qui sont disposés radialement ou presque radialement tout autour du projectile, caractérisée par les étapes opératoires suivantes :

a) on prépare les tôles (62, 62', 63) pour une liaison intime avec une matière de charge (57) durcissable à partir de l'état fluide, de plus faible densité que la matière des tôles,

b) on place les tôles (62, 62', 63) avec leurs surfaces inférieures comportant les premiers moyens d'accouplement par concordance de forme (54) à distance radiale d'un axe central (A) qui correspond sensiblement au rayon du projectile, de façon que chaque tôle fasse avec la tôle qui en est voisine, dans un plan de projection auquel l'axe central (A) est orthogonal, un angle prédéterminable,

c) le long d'au moins deux plans qui font (par rapport à l'axe central (A)) un angle de 180°, on place dans chaque cas deux tôles (62, 62') au voisinage immédiat l'une de l'autre dans une zone de jonction (64),

d) on relie mutuellement les tôles voisines (62, 62' 63) en comblant chaque intervalle respectif par la matière de charge durcissable (57),

e) les zones de jonctions (64) forment, après le durcissement de la matière de charge (57), les joints de séparation (66) entre les segments (2, 4, 6, 7, 8, 9) de la cage,

f) des moyens (20, 30 et 37 ou 50) qui franchissent les zones de jonction (64) de façon prédéterminable et de façon à se détacher au plus tard lorsque le projectile a quitté le tube d'une arme, étant prévus.

14. Procédé selon la revendication 13, caractérisé en ce qu'on forme dans les tôles (62, 62', 63) des perçages (68) que l'on comble par la matière de charge durcissable (57), cette dernière constituant les moyens (68) pour franchir chaque zone de jonction (64).

15. Procédé selon la revendication 13 ou 14, caractérisé par les étapes opératoires suivantes :

a) on introduit la matière de charge (57) de façon qu'elle entoure les tôles (63) extérieurement pour constituer des moyens (20, 30 et 50) de franchissement,

b) on introduit dans la matière de charge (57) des moyens de séparation (72) pour obtenir les joints de séparation (66),

c) les moyens de séparation (72) sont conformés de façon qu'ils permettent la formation de moyens de franchissement entre des segments mutuellement voisins (2, 4, 6, 7, 8, 9) à partir de la matière de charge (57).

16. Procédé selon la revendication 15, caractérisé en ce qu'on prévoit, comme moyen de séparation (72), une feuille de coupe correspondante.

17. Procédé de fabrication d'une cage de propulsion segmentable présentant les caractéristiques de la revendication 1 ou de l'une des revendications 6 à 12, en utilisant des éléments plats introduits dans le corps qui forment des parties du contour intérieur de la cage et y comportent de premiers moyens d'accouplement par concordance de forme (54) devant coopérer avec de seconds moyens d'accouplement par concordance de forme situés sur le projectile et disposés radialement ou presque radialement autour du projectile, caractérisé en ce qu'on ménage avec enlèvement de copeaux, de l'extérieur, dans un corps d'un seul tenant (1), des fentes (45, 46, 60), de façon que, non seulement dans la partie axialement postérieure du corps, au voisinage d'une surface de réception de pression gazeuse (38), il reste une zone sans fentes constituant une épaisseur de matière (50) formant une zone destinée à la rupture, mais qu'il reste également, dans la zone axialement antérieure (11), au bord antérieur (18) d'une poche d'air (12) et dans la zone proche du projectile, ainsi éventuellement que dans la zone axialement centrale (32) du corps, d'autres épaisseurs de matière (20, 30, 40) et en ce qu'ensuite on introduit dans les fentes (45, 46, 60) de l'extérieur, des insertions plates en tôle ou en une matière propre à la coulée et durcissable, dont la surface est traitée de façon qu'elle se raccorde hermétiquement aux parois de fente (figures 1 à 4).

FIG. 1

FIG. 2

FIG. 3

FIG. 4

FIG. 5

FIG. 6

FIG. 7

FIG. 8

FIG. 9

FIG. 10

FIG. 11

# FIG. 12

FIG. 13

FIG. 14

FIG. 15

FIG. 16